# EUROPEAN PATENT SPECIFICATION

(11) **EP 3 009 751 B1**
(45) Date of publication and mention of the grant of the patent: **16.01.2019**
(21) Application number: 14189175.4
(22) Date of filing: 16.10.2014
(51) Int. Cl.: F24D 19/10, G05D 23/19

(54) **Heating system and method for hydraulic balancing said heating system**
Heizsystem und Verfahren zur Durchführung eines hydraulischen Abgleichs dieses Heizsystems
Système de chauffage et procédé pour compensation hydraulique tel système

(43) Date of publication of application: 20.04.2016
(73) Proprietor: Danfoss A/S, 6430 Nordborg (DK)
(72) Inventor: Frederiksen, Bjarne, 8632 Lemming (DK); Gregersen, Niels, 8464 Galten (DK)

(56) References cited:
- EP-A1- 2 728 269
- EP-A2- 2 420 748
- WO-A1-2014/045134
- DE-A1- 4 221 725

## Description

The present invention relates to a heating system comprising a heat source heating a heat transfer fluid, a circulation pump, at least two heat exchangers connected to said heat source and said circulation pump, each heat exchanger being provided with a valve controlling a flow of said heat transfer fluid through said heat exchanger, each valve being actuated by actuator means, and control means controlling said actuator means, wherein said control means are structured and arranged to perform a balancing of said heat exchangers during a starting period and said control means controls said valve by pulse width modulation, said pulse width modulation having a modulation time period.

Furthermore, the invention relates to a method for controlling a heating system, said heating system comprising a heat source heating a heat transfer fluid, a circulation pump, at least two heat exchangers connected to said heat source and said circulation pump, each heat exchanger being provided with a valve controlling a flow of said heat transfer fluid through said heat exchanger, each valve being actuated by actuator means, and control means controlling said actuator means, and wherein during a starting period said heat exchangers are balanced and said valves are controlled with pulse width modulation, said pulse width modulation having a modulation time period.

Such a heating system and such a method for controlling a heating system are known from WO 2014/045134 A1. This reference relates to a method for operating a heating system. The heating system comprises a heat source heating a heat transfer fluid. The heating system also comprises a central pump and three heat exchangers connected to the heat source and the central pump. Each heat exchanger is being provided with a valve controlling flow of heat transfer fluid through the heat exchangers. Therein, each valve is actuated by actuator means. Central control means are provided controlling the actuator means. The central control means are structured and arranged to limit the valve lift of each valve during a heating mode.

The invention will be described with a floor heating system as an example for the heating system. The heat exchangers are mounted in a floor of a room. However, the invention can be used with other heat exchangers as well, for example, radiators.

The heat source can provide positive or negative temperatures, i.e. the invention can be used for heating or cooling. The term "heating" is used to simplify the description and should cover "cooling" as well in this specific case.

Each room is provided with a temperature sensor detecting the actual temperature of the room. The temperature sensor is connected to the control means. The control means compares the actual room temperature with a desired room temperature or set temperature and controls the flow of the heat transfer fluid through the respective heat exchanger so that the actual room temperature should be the same as the desired room temperature or set temperature.

However, when rooms have different sizes the heat exchangers have different sizes as well and therefore different flow resistances. A larger heat exchanger has a larger flow resistance than a smaller heat exchanger. The consequence is that a room having a higher heat demand receives less heat transfer fluid than necessary so that it is difficult to reach the set temperature.

It is therefore known to balance the heat exchangers in the heat system so that the heat transfer fluid is shared between the heat exchanger as desired. However, balancing of a heating system requires some knowledge and is in many cases not performed correctly. Therefore, the comfort feeling of a person living in the rooms in which the heating system is installed is not fully satisfied.

EP 2 728 269 A1 relates to a method for hydraulic calibration of a heating system. The heating system comprises a heater circuit pump and three heat exchangers connected to the heater circuit pump. Each heat exchanger is provided with a valve controlling the flow of heat transfer fluid through the heat exchangers. The valves can be designed to be actuated remotely and automatically by means of a controller. The controller is structured and arranged to balance the temperatures of the heat exchangers relative to each other.

EP 2 420 748 A2 relates to a method and a system for hydraulic balancing of a heating system. The heating system comprises at least two heat exchangers. A heating fluid circulates through the heat exchangers which are provided with thermostat valves. Each valve comprises its own actuator, wherein the valves can communicate by means of a control unit. Hydraulic balancing of the heating system can be done fully automatically, e. g. during a heating phase of the heating system.

DE 42 21 725 A1 relates to a method providing automatic hydraulic balancing of a heating system. The heating system comprises a plurality of heat exchangers and a central control means. The heat exchangers are provided with valves which control a flow through the heat exchangers. A hydraulic balancing is executed prior to an operation of the heating system.
The object underlying the invention is to increase the comfort feeling of a person living in a room in which the heating system is installed.

This object is solved in a heating system as described at the outset in that during said starting period said control means compare valve open time periods of said valves with each other and changes a maximum opening stroke of the valves having the shortest valve opening time period.

When the heating system is installed in the room and is put into operation for the first time, a starting period starts. The control means now can balance the heat exchangers so that no operation or work of an installer or any other person is necessary. Since the control means operate fully automatically it is sure that the rules for balancing the heat exchangers are followed and that at the end of a starting period the heat exchangers are completely balanced. The starting period can be repeated at the beginning of each heating period although in most cases this is not necessary. The starting period can be repeated in other intervals, for example, daily, weekly, or monthly. It can be repeated as well upon other conditions which will be explained below.

The modulation time period in a floor heating system can be, for example, one hour. The valves are controlled to be open during a fraction of each modulation time period. This fraction is also termed "valve open time period". When more heat is required, this valve open time period is increased. When less heat is required, the valve open time period is decreased provided that the system is balanced.
The balancing of the heat exchangers is performed by adjusting the maximum opening stroke of each valve. This takes in account that the heat exchanger having the lowest flow resistance has the shortest valve open time period since it gets the largest part of the available heat transfer fluid flow. Therefore, it is clear that the maximum opening stroke of the valve of this heat exchanger is to be reduced. Such a reduction can be performed stepwise and for all heat exchangers. After a couple of modulation time periods all heat exchangers will have the same or almost the same valve open time period. In this case the system is sufficiently balanced. Balancing is made literately. The maximum opening stroke of a valve is defined as the actual limitation stroke of the valve at a given time and not the fully opening stroke of the valve.

Preferably during said starting period said control means adjust a maximum opening stroke of the valve having the longest valve open time period so that this valve has a valve open time period being a predetermined fraction of said modulation time period. In a floor heating system said predetermined fraction can be, for example, 70 % of the modulation time period. In this case there are enough possibilities to increase the flow of the heating fluid in case a larger heat is demanded.

Preferably said actuator means are stepping motors. Stepping motors can easily be controlled. The number of steps made by the respective stepping motor gives a clear indication of the valve opening or valve stroke, the control means "note" for each valve the opening degree.

Preferably at the end of said starting period said control means stores for each valve a number of steps defining a maximum opening stroke. It is only necessary to store for each valve the respective number of steps. The control means "notes" that the respective stepping motor must not be actuated to make more steps. Therefore, the maximum opening stroke is reliably limited.

In a preferred embodiment after said starting period said control means keep open all valves and control flow of heat transfer fluid by controlling said circulation pump. This saves energy, for example, battery power in actuators with batteries, since there is no energy necessary for actuating the valves. The valves are kept open to the extend found out in the starting period.

The object is solved in a method as described at the outset in that during said starting period valve open time periods of all valves are compared to each other and a maximum valve opening stroke of a valve having the shortest valve open time period is decreased.
As described above, no manual work of an installer or operator is necessary. The method can run automatically. At the end of the starting period the system is balanced.

As described above, in a floor heating system said modulation time period can be, for example, one hour. As described above, the heat exchanger having the lowest flow resistance of all heat exchangers of the heating system will receive the largest flow of heat transfer fluid. Therefore, the set temperature in the respective rooms will be reached in the shortest time. When the set temperature is reached, the respective valve closes to stop further supply of heat to the respective room. Therefore, the valve open time period of this heat exchanger is the shortest. When the maximum valve opening stroke of this valve is reduced, the flow resistance through this heat exchanger is reduced. In the next modulation time period this heat exchanger will receive a smaller fraction of the overall heat transfer fluid flow. Again the valve open time periods of all valves are compared to
each other and again the valves having the shortest valve open time is decreased. This can be the same valve as before or it can be another valve. At the same time it is to be expected that a valve having previously the longest valve open time will now have a smaller valve open time than before since the flow resistance of this heat exchanger has not been increased so that it now receives a larger fraction of the overall heat transfer fluid flow.

Preferably the maximum opening stroke of the valves having the longest valve open time period is adjusted so that this valve has a valve open time period being a predetermined fraction of said modulation time period. This fraction can be, for example, 70 %. It can be provided that at the end of the starting period the maximum valve strokes of all valves are adjusted so that all valves have a valve open time period being said predetermined fraction of said modulation time period. In other words, at the end of the starting period all valves can, for example, have the same valve open time period.

Preferably stepping motors are used as actuators and at the end of said starting period for each valve a number of steps is stored defining the maximum opening stroke of this valve. In a stepping motor the number of steps corresponds to a position of the motor. The position of the motor defines the opening stroke of the respective valve. When the numbers of steps defining the maximum opening strokes of the respective valves are stored, the maximum opening stroke of these valves can easily be limited by the control means without the necessity of adjusting any mechanical parts.

In a preferred embodiment after said starting period all valves are kept open with a maximum opening stroke defined during said starting period and the flow of said heat transfer fluid through said heat exchangers is controlled by said circulation pump. In this case there is no additionally energy necessary for actuating the valves.

A preferred example of the invention will now be described in more detail with reference to the drawing, wherein:
- Fig. 1: is a schematic illustration of a heating system,
- Fig. 2: is a schematic illustration showing the situation at the beginning of a starting period,
- Fig. 3: is a schematic illustration showing changings during the starting period, and
- Fig. 4: is a schematic illustration showing the situation at the end of the starting period.

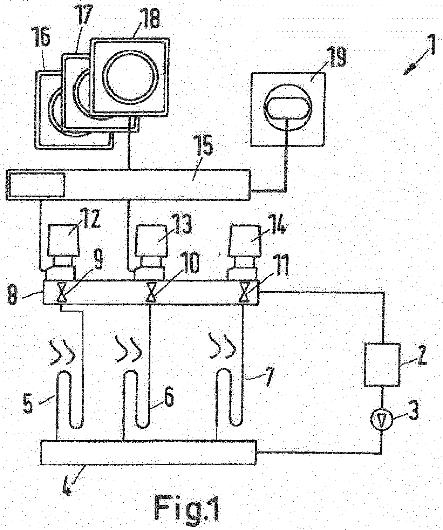

Fig. 1 schematically shows a heating system 1 comprising a heat source 2 heating a heat transfer fluid, for example, heating water. The heat transfer fluid is pumped by means of a circulation pump 3 to a supply manifold 4. A number of heat exchangers 5-7 in form of floor heating means are connected to the supply manifold 4 and to a return manifold 8. The return manifold 8 is again connected to the heat source 2.

Each of the heat exchangers 5-7 is provided with a valve 9, 10, 11. The valves 9, 10, 11 control the flow of the heat transfer fluid through the respective heat exchangers 5, 6, 7. When a valve 9, 10, 11 is closed, there is no flow of heat transfer fluid through the respective heat exchanger 5, 6, 7. When the valve 9, 10, 11 is fully open, a maximum flow of heat transfer fluid through the respective heat exchanger 5, 6, 7 is possible.

Each valve 9, 10, 11 is actuated by means of actuator means 12, 13, 14. All actuator means 12, 13, 14 are connected to common control means 15 by wire or wireless.

A room thermostat 16, 17, 18 is assigned to each of the heat exchangers 5, 6, 7. The room thermostats 16, 17, 18 are connected to the common control means 15 by means of wire or wireless. The control means 15 is connected to a power supply.

The valves 9, 10, 11 are opened and closed by the respective actuators 12, 13, 14. The actuators 12, 13, 14 are in form of stepping motors. Other means of actuators are possible, for example, a DC motor having an encoder. Each stepping motor can, for example, perform 1000 steps to move the valves 9, 10, 11 from the fully closed to a fully open position. When, for example, the valves have a maximum stroke of 5 mm, each step of the stepping motor moves a valve element by 1/200 mm. In most cases the resolution of the stepping motor is even better, i.e. one step is less than 1/200 mm.

When the heat exchangers 5, 6, 7 are installed in rooms having different sizes and/or different heat demands, they have in most cases different characteristics, in particular different flow resistances.

If, for example, the heat exchanger 5 is installed in a living room having a size of 30 m², the heat exchanger 6 is installed in a bathroom having a size of 10 m² and the heat exchanger 7 is installed in a sleeping room having a size of 10 m², the flow of the heat transfer fluid is primarily directed to the heat exchanger 6 in the bathroom since this heat exchanger is much smaller than the heat exchanger 5 in the living room and the bathroom has a higher heat demand than the sleeping room.

Without any additional operations this would lead to an undesirable distribution of the heat transfer fluid to the respective heat exchangers 5, 6, 7 even when all heat exchangers 5, 6, 7 are supplied with the maximum flow of heat transfer fluid, i.e. even when the respective valves 9, 10, 11 are fully open.

In a floor heating system the valves are often controlled by pulse width modulation. The pulse width modulation has a modulation time period. In the present case the modulation time period is one hour. The valves 9, 10, 11 are opened to a full extend in a fraction of the modulation time period and closed in the remaining time of the modulation time period. The time in which a valve is open or "on" during the modulation time period is briefly termed "valve open time period".

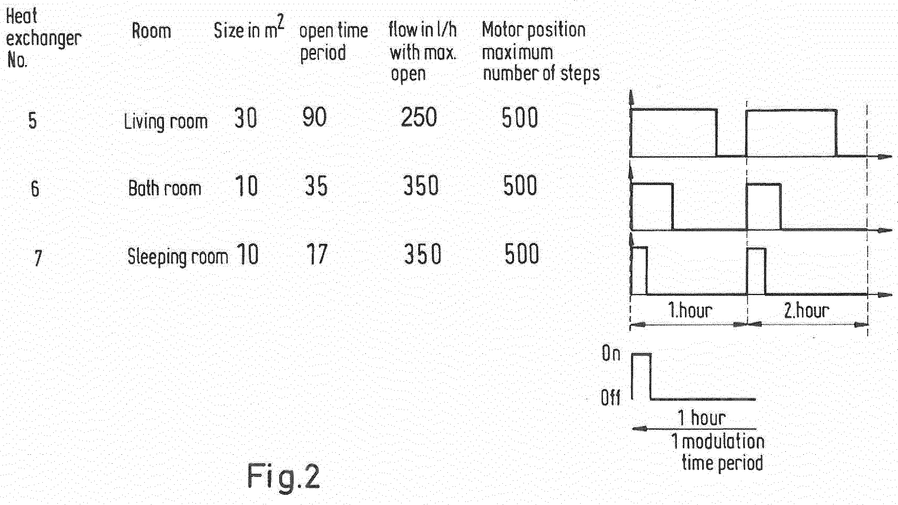

Fig. 2 shows a situation at the beginning of a starting period. At this time no balancing of the heat exchangers has been performed.

The first column shows the reference sign of the heat exchanger. The second column briefly describes the room. The third column describes the size of the room. The fourth column shows the open time period in percent of the modulation time period. The fifth column shows the flow in liter per hour with the respective valves maximal open. The sixth column shows the motor position expressed in the maximum number of allowed steps which has previously been adjusted. This is not necessarily the maximum number of steps possible. This column shows the presently valid limitation. The seventh column schematically shows the opening behavior of the valves.

It can be seen that valves 9 for heat exchanger 5 in the living room is kept open the longest time to satisfy the heat requirements of the living room. The valve open time period for heat exchanger 5 is 90 %. Valve 10 for heat exchanger 6 is open for 35 % of the modulation time period. The shortest valve open time period of 17 % of the modulation time period has valve 11 for heat exchanger 7. This means that in the time in which all valves 9, 10, 11 are fully open, the greatest fraction of the heat transfer fluid flow passes through heat exchanger 7, which is not desired, since a higher temperature is required in the bathroom, i.e. for heat exchanger 6.

The control means 15 now compares the valve open time periods of all valves 9, 10, 11 and reduces or decreases the maximum number of steps of the stepping motors of actuators 13, 14.

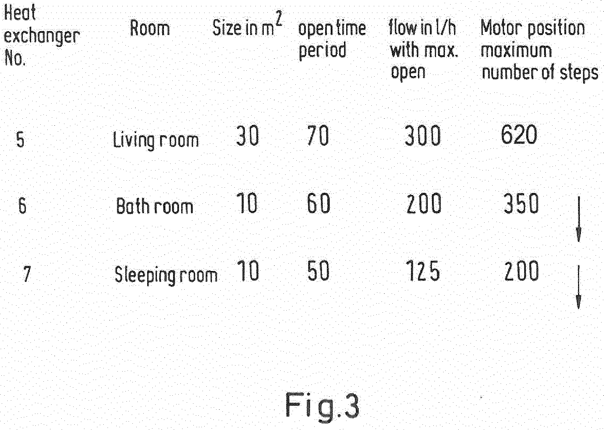

Fig. 3 shows an abbreviated operation in which the allowed maximum number of steps is reduced for two actuators 13, 14. Another way would be to reduce the maximum number of steps for one actuator 14 only. Furthermore the number of steps is increased for actuator 12.

The reduction in the allowed maximum number of steps has the consequence that the valves 10, 11 are limited in their stroke, i.e. the maximum opening stroke is smaller than at the time shown in Fig. 2. This reduces the flow through the heat exchangers 6, 7. Even if the situation for heat exchanger 5 would not have been changed, more heat transfer fluid flow were directed through heat exchanger 5 so that the valve open time period for heat exchanger 5 has been lowered to 70 % of the modulation time period, for example, 70 % of one hour. In the present case the maximum allowed number of steps has however been increased.

The comparison between the valve open time periods of the respective valves 9, 10, 11 can be repeated in every modulation time period as long as the valve open time periods differ from each other.

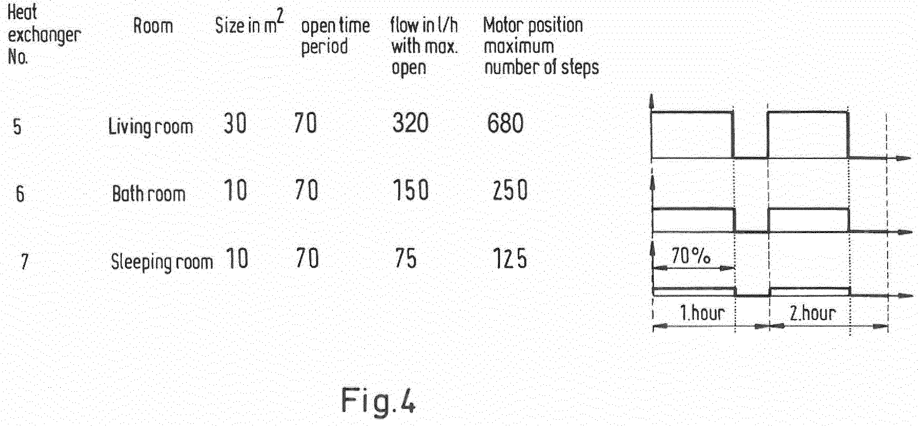

When all valve open time periods are equal, as shown in Fig. 4, balancing is finished and the starting period ends. As an additional measurement it can be provided that the valve open time period for the valve 9 with the longest valve open time period is fixed to a predetermined fraction of the modulation time period, for example, to 70 % of the modulation time period. At the end of the starting period all valve open time periods are then consequently adjusted to 70 % of the modulation time period.

It is possible to define a dead band around said 70 % and to repeat the starting period when at least one valve departs from this dead band.

As a consequence of the iterative balancing during the starting period, the motor position, i.e., the presently allowable maximum number of steps, of the actuators 12, 13, 14 has been changed for the actuators 13, 14 and not been changed for actuator 12. The stepping motor of actuator 12 has still the possibility to move over the full possible extend, i.e. over 500 steps. The actuator 13 for the bathroom heat exchanger 6, can, however, move only over half of its initially possible stroke, i.e. only over 250 steps. The actuator 14 for the sleeping room heat exchanger 7 can open only a quarter of its theoretically possible stroke, i.e. over 125 steps only.

The valve opening time period for all actuators 13, 14 are equal. However, the flow (shown in the last column) differs for each heat exchanger 5, 6, 7.

After the starting period it is possible to leave the valves 9, 10, 11 open in their presently maximum allowed position, i.e. they are never closed. The control of the flow of the heat transfer fluid is performed with means of the circulation pump 3. This circulation pump 3 is switched on during the 70 % open time period shown in Fig. 4 and switched off during the remaining part of the modulation time period.

Such a solution has several advantages. The circulation pump 3 can be dimensioned smaller since not all valves are open to 100 %. Since all valves are open at the same time, there is a smaller influence to the ideal pressure.

The circulation pump 3 can be stopped for 30 % of the modulation time period.

Furthermore, the control means 15 can fix a minimum flow and a minimum temperature for the heat exchangers 5, 6, 7, so that the floor is never cold, even when there is some radiation into a room.

The actuator having the greatest number of allowable steps, i.e. the stepping motor of the valve having the greatest opening stroke, controls the supply temperature of the heat exchanger 2 over the year so that the actuator can be kept in the same position, i.e. is fully open.

When the outside temperature is colder, for example, during winter days, the valves are open a bit longer as 70 % modulation time period shown in Fig. 4, but the heat source 2 will be controlled by the controller 15 (the respective connection is not shown), so that the supply temperature of the heat source 2 is increased and the open time period can again return to the 70 % of the modulation time period.

When, for example, in spring, the outdoor temperature rises the valve open time period will fall below 70 %. However, the control means 15 will lower the supply temperature so that the valves are again open for the valve open time period of 70 %. This is an advantage in particular in connection with a heat pump since the forward temperature can be kept as low as possible.

At the end of the starting period the control means 15 stores the maximum allowed number of steps for each of the actuators 12-14 so that after the starting period all valves 9, 10, 11 (but one) can be opened with a limited stroke only. The starting period is necessary after installation of the heating system 1. It can be repeated, for example, at the beginning of each heating period. The starting period can be initiated manually, for example, when conditions have been changed, for example, when new windows have been mounted or a floor heat exchanger is covered by other furniture or by a new carpet.

## Claims

1. Heating system (1) comprising a heat source (2) heating a heat transfer fluid, a circulation pump (3), at least two heat exchangers (5-7) connected to said heat source (2) and said circulation pump (3), each heat exchanger (5-7) being provided with a valve (9-11) controlling a flow of said heat transfer fluid through said heat exchanger (5-7), each valve being actuated by actuator means (12-14), and control means (15) controlling said actuator means (12-14), and wherein said control means (15) are structured and arranged to perform a balancing of said heat exchangers (5-7) during a starting period and said control means (15) control said valves (9-11) by pulse width modulation, said pulse width modulation having a modulation time period **characterized in that** during said starting period said control means (15) compare valve open time periods of said valves (9-11) with each other and changes a maximum opening stroke of the valve (9-11) having the shortest valve open time period.

2. Heating system according to claim 1, **characterized in that** during said starting period said control means (15) adjust a maximum opening stroke of the valve (9-11) having the longest valve open time period so that this valve (9-11) has a valve open time period being a predetermined fraction of said modulation time period.

3. Heating system according to any of claims 1 or 2, **characterized in that** said actuator means (12-14) are stepping motors.

4. Heating system according to claim 3, **characterized in that** at the end of said starting period said control means (15) store for each valve (9-11) a number of steps defining a maximum opening stroke.

5. Heating system according to any of claims 1 to 4, **characterized in that** after said starting period said control means (15) keep open all valves (9-11) and control flow of heat transfer fluid by controlling said circulation pump (3).

6. Heating system according to any of claims 1 to 5, **characterized in that** said control means (15) defines a minimum opening stroke for each valve (9-11).

7. Method for controlling a heating system (1), said heating system (1) comprising a heat source(2) heating a heat transfer fluid,
a circulation pump (3), at least two heat exchangers (5-7) connected to said heat source (2) and said circulation pump (3), each heat exchanger (5-7) being provided with a valve (9-11) controlling a flow of said heat transfer fluid through said heat exchanger (5-7), each valve (9-11) being actuated by actuator means (12-14), and control means (15) controlling said actuator means (12-14), and wherein during a starting period said heat exchangers (5-7) are balanced and said valves (9-11) are controlled with pulse width modulation, said pulse width modulation having a modulation time period **characterized in that** during said starting period valve open time periods of all valves (9-11) are compared to each other and a maximum valve opening stroke of a valve (9-11) having the shortest valve open time period is decreased.

8. Method according to claim 7, **characterized in that** during said starting period the maximum valve opening stroke of the valve (9-11) having the longest valve open time period is adjusted so that this valve (9-11) has a valve open time period being a predetermined fraction of said modulation time period.

9. Method according to any of claims 7 or 8, **characterized in that** stepping motors are used as actuators (12-14) and at the end of said starting period for each valve (9-11) a number of steps is stored defining the maximum opening stroke of this valve (9-11).

10. Method according to any of claims 7 to 9, **characterized in that** after said starting period all valves (9-11) are kept open with a maximum opening stroke defined during said starting period and the flow of said heat transfer fluid through said heat exchangers (5-7) is controlled by said circulation pump (3).

## Patentansprüche

1. Heizsystem (1), umfassend eine ein Wärmeträgermedium erhitzende Wärmequelle (2), eine Umwälzpumpe (3), wenigstens zwei an die Wärmequelle (2) und die Umwälzpumpe (3) angeschlossene Wärmetauscher (5-7), wobei jeder Wärmetauscher (5-7) mit einem Ventil (9-11), das einen Strom des Wärmeträgermediums durch den Wärmetauscher (5-7) regelt, versehen ist, wobei jedes Ventil von Stellantriebmitteln (12-14) betätigt wird, und Steuerungsmittel (15), die die Stellantriebmittel (12-14) steuern, und wobei die Steuerungsmittel (15) so ausgelegt und angeordnet sind, dass sie einen Abgleich der Wärmetauscher (5-7) während eines Startzeitraums durchführen, und die Steuerungsmittel (15) die Ventile (9-11) durch Pulsweitenmodulation steuern, wobei die Pulsweitenmodulation eine Modulationszeit aufweist, die **dadurch gekennzeichnet ist, dass** die Steuerungsmittel (15) während des Startzeitraums Ventilöffnungszeiten der Ventile (9-11) miteinander vergleichen und einen maximalen Öffnungshub des Ventils (9-11) ändern, das die kürzeste Ventilöffnungszeit aufweist.

2. Heizsystem nach Anspruch 1, **dadurch gekennzeichnet, dass** die Steuerungsmittel (15) während des Startzeitraums einen maximalen Öffnungshub des Ventils (9-11) einstellen, das die längste Ventilöffnungszeit aufweist, so dass dieses Ventil (9-11) eine Ventilöffnungszeit aufweist, die ein vorgegebener Teil der Modulationszeit ist.

3. Heizsystem nach einem der Ansprüche 1 oder 2, **dadurch gekennzeichnet, dass** es sich bei den Stellantriebmitteln (12-14) um Schrittmotoren handelt.

4. Heizsystem nach Anspruch 3, **dadurch gekennzeichnet, dass** die Steuerungsmittel (15) für jedes Ventil (9-11) am Ende des Startzeitraums eine Anzahl von Schritten speichern, die einen maximalen Öffnungshub festlegen.

5. Heizsystem nach einem der Ansprüche 1 bis 4, **dadurch gekennzeichnet, dass** die Steuerungsmittel (15) nach dem Startzeitraum alle Ventile (9-11) offen halten und den Strom des Wärmeträgermediums durch Steuern der Umwälzpumpe (3) steuern.

6. Heizsystem nach einem der Ansprüche 1 bis 5, **dadurch gekennzeichnet, dass** die Steuerungsmittel (15) einen minimalen Öffnungshub für jedes Ventil (9-11) festlegen.

7. Verfahren zum Steuern eines Heizsystems (1), wobei das Heizsystem (1) Folgendes umfasst: eine ein Wärmeträgermedium erhitzende Wärmequelle (2), eine Umwälzpumpe (3), wenigstens zwei an die Wärmequelle (2) und die Umwälzpumpe (3) angeschlossene Wärmetauscher (5-7), wobei jeder Wärmetauscher (5-7) mit einem Ventil (9-11), das einen Strom des Wärmeträgermediums durch den Wärmetauscher (5-7) regelt, versehen ist, wobei jedes Ventil (9-11) von Stellantriebmitteln (12-14) betätigt wird, und Steuerungsmittel (15), die die Stellantriebmittel (12-14) steuern, und wobei die Wärmetauscher (5-7) während eines Startzeitraums abgeglichen werden und die Ventile (9-11) durch Pulsweitenmodulation gesteuert werden, wobei die Pulsweitenmodulation eine Modulationszeit aufweist, die **dadurch gekennzeichnet ist, dass** Ventilöffnungszeiten der Ventile (9-11) während des Startzeitraums miteinander verglichen werden und ein maximaler Ventilöffnungshub eines Ventils (9-11), das die kürzeste Ventilöffnungszeit aufweist, verringert wird.

8. Verfahren nach Anspruch 7, **dadurch gekennzeichnet, dass** der maximale Ventilöffnungshub des Ventils (9-11), das die längste Ventilöffnungszeit aufweist, während des Startzeitraums eingestellt wird, so dass dieses Ventil (9-11) eine Ventilöffnungszeit aufweist, die ein vorgegebener Teil der Modulationszeit ist.

9. Verfahren nach einem der Ansprüche 7 oder 8, **dadurch gekennzeichnet, dass** Schrittmotoren als Stellantriebmittel (12-14) verwendet werden und am Ende des Startzeitraums für jedes Ventil (9-11) eine Anzahl von Schritten gespeichert wird, die den maximalen Öffnungshub des Ventils (9-11) festlegen.

10. Verfahren nach einem der Ansprüche 7 bis 9, **dadurch gekennzeichnet, dass** alle Ventile (9-11) nach dem Startzeitraum mit einem während des Startzeitraums festgelegten maximalen Öffnungshub offen gehalten werden und der Strom des Wärmeträgermediums durch die Wärmetauscher (5-7) durch die Umwälzpumpe (3) geregelt wird.

## Revendications

1. Système de chauffage (1) comprenant une source de chaleur (2) chauffant un fluide de transfert thermique, une pompe de circulation (3), au moins deux échangeur de chaleur (5-7) connectés à ladite source de chaleur (2) et à ladite pompe de circulation (3), chaque échangeur de chaleur (5-7) étant pourvu d'une soupape (9-11) régulant un écoulement dudit fluide de transfert thermique à travers ledit échangeur de chaleur (5-7), chaque soupape étant actionnée par des moyens d'actionneur (12-14), et des moyens de commande (15) commandant lesdits moyens d'actionneur (12-14), et lesdits moyens de commande (15) étant structurés et disposés de manière à effectuer un équilibrage desdits échangeurs de chaleur (5-7) au cours d'une période de démarrage, et lesdits moyens de commande (15) commandant lesdites soupapes (9-11) par modulation de largeur d'impulsion, ladite modulation de largeur d'impulsion ayant une période de modulation, **caractérisé en ce qu'**au cours de ladite période de démarrage, lesdits moyens de commande (15) comparent des périodes d'ouverture de soupape desdites soupapes (9-11) les unes avec les autres et modifient une course d'ouverture maximale de la soupape (9-11) ayant la période d'ouverture de soupape la plus courte.

2. Système de chauffage selon la revendication 1, **caractérisé en ce qu'**au cours de ladite période de démarrage, lesdits moyens de commande (15) ajustent une course d'ouverture maximale de la soupape (9-11) ayant la période d'ouverture de soupape la plus longue, de telle sorte que cette soupape (9-11) présente une période d'ouverture de soupape constituant une fraction prédéterminée de ladite période de modulation.

3. Système de chauffage selon l'une quelconque des revendications 1 et 2, **caractérisé en ce que** lesdits moyens d'actionneur (12-14) sont des moteurs pas à pas.

4. Système de chauffage selon la revendication 3, **caractérisé en ce qu'**à la fin de ladite période de démarrage, lesdits moyens de commande (15) enregistrent, pour chaque soupape (9-11), un certain nombre de pas définissant une course d'ouverture maximale.

5. Système de chauffage selon l'une quelconque des revendications 1 à 4, **caractérisé en ce qu'**après ladite période de démarrage, lesdits moyens de commande (15) maintiennent ouvertes toutes les soupapes (9-11) et régulent l'écoulement de fluide de transfert thermique en commandant ladite pompe de circulation (3).

6. Système de chauffage selon l'une quelconque des revendications 1 à 5, **caractérisé en ce que** lesdits moyens de commande (15) définissent une course d'ouverture minimale pour chaque soupape (9-11).

7. Procédé de commande d'un système de chauffage (1), ledit système de chauffage (1) comprenant une source de chaleur (2) chauffant un fluide de transfert thermique,
une pompe de circulation (3), au moins deux échangeurs de chaleur (5-7) connectés à ladite source de chaleur (2) et à ladite pompe de circulation (3), chaque échangeur de chaleur (5-7) étant pourvu d'une soupape (9-11) régulant un écoulement dudit fluide de transfert thermique à travers ledit échangeur de chaleur (5-7), chaque soupape (9-11) étant actionnée par des moyens d'actionneur (12-14), et des moyens de commande (15) commandant lesdits moyens d'actionneur (12-14), et pendant une période de démarrage, lesdits échangeurs de chaleur (5-7) étant équilibrés et lesdites soupapes (9-11) étant commandées par modulation de largeur d'impulsion, ladite modulation de largeur d'impulsion ayant une période de modulation, **caractérisé en ce qu'**au cours de ladite période de démarrage, les périodes d'ouverture de soupape de toutes les soupapes (9-11) sont comparées les unes avec les autres et une course d'ouverture de soupape maximale d'une soupape (9-11) ayant la période d'ouverture de soupape la plus courte est diminuée.

8. Procédé selon la revendication 7, **caractérisé en ce qu'**au cours de ladite période de démarrage, la course d'ouverture de soupape maximale de la soupape (9-11) ayant la période d'ouverture de soupape la plus longue est ajustée de telle sorte que cette soupape (9-11) ait une période d'ouverture de soupape qui est une fraction prédéterminée de ladite période de modulation.

9. Procédé selon l'une quelconque des revendications 7 et 8, **caractérisé en ce que** des moteurs pas à pas sont utilisés en tant qu'actionneurs (12-14) et à la fin de ladite période de démarrage, pour chaque soupape (9-11), un certain nombre de pas sont enregistrés, définissant la course d'ouverture maximale de cette soupape (9-11).

10. Procédé selon l'une quelconque des revendications 7 à 9, **caractérisé en ce qu'**après ladite période de démarrage, toutes les soupapes (9-11) sont maintenues ouvertes avec une course d'ouverture maximale définie au cours de ladite période de démarrage, et l'écoulement dudit fluide de transfert thermique à travers lesdits échangeurs de chaleur (5-7) est régulé par ladite pompe de circulation (3).
